# EUROPEAN PATENT SPECIFICATION

(11) **EP 3 476 647 B1**
(45) Date of publication and mention of the grant of the patent: **20.04.2022**
(21) Application number: 17905917.5
(22) Date of filing: 14.09.2017
(51) Int. Cl.: B60L 50/50, B60L 50/10, B60L 58/14

(54) **POWER SUPPLY SYSTEM FOR ELECTRIC VEHICLE, CONTROL METHOD AND ELECTRIC VEHICLE**
STROMVERSORGUNGSSYSTEM, STEUERUNGSVERFAHREN FÜR ELEKTROFAHRZEUGE UND ELEKTROFAHRZEUG
SYSTÈME D'ALIMENTATION POUR VÉHICULE ÉLECTRIQUE, PROCÉDÉ DE COMMANDE ET VÉHICULE ÉLECTRIQUE

(30) Priority: 01.09.2017 CN 201710779935
(43) Date of publication of application: 01.05.2019
(73) Proprietor: Suzhou DSM Green Power Ltd., Suzhou, Jiangsu 215134 (CN)
(72) Inventor: LI, Jingyu, Suzhou Jiangsu 215134 (CN); WU, Walter, Suzhou Jiangsu 215134 (CN)
(74) Representative: DTS Patent- und Rechtsanwälte Schnekenbühl und Partner mbB
(86) International application number: PCT/CN2017/101685
(87) International publication number: WO 2019/041383

(56) References cited:
- CN-A- 101 966 821
- CN-A- 102 951 037
- CN-A- 103 481 785
- CN-A- 105 904 978
- CN-A- 105 904 978
- JP-A- 2013 038 910
- KR-B1- 101 490 928
- US-A1- 2011 049 977
- US-A1- 2017 166 065
- US-B2- 7 692 404

## Description

### CROSS-REFERENCE TO RELATED APPLICATION

The present application claims priority to Chinese Patent Application No. 201710779935.8 filed on September 1, 2017.

### TECHNICAL FIELD

The present disclosure relates to the technique field of new energy vehicles, in particular to an electric vehicle and a power supply system and a control method therefor.

### BACKGROUND

At present, power systems used by pure electric vehicles over the world always employ a single battery pack or a serial application of multiple battery packs, where equalization in term of the status of charge and battery characteristics needs to be maintained among battery cells and battery packs. Besides, there are strict requirements on the uniformity of the battery cells.

A single battery pack or a serial application of multiple battery packs may have disadvantages in that, new and old batteries or batteries of different capacities or different characteristics cannot be used together, and that a failed battery cell or battery pack may result in a failure of the entire battery system. These problems may increase the cost of producing and screening battery systems significantly and make the reuse of old batteries even more difficult.

CN 105 904 978 A discloses a range extended electric vehicle comprising two sets of power batteries. A generator in a range extender is connected to and used to charge the first and the second sets of power batteries. One set of power battery can be selectively charged according to its state of charge (SOC) while the other set is powering the vehicle.

KR 101 490 928 B1 discloses a charging device and a charging method for charging a battery of an electric vehicle or a plug-in hybrid car.

### SUMMARY

In this view, the present invention describes an electric vehicle according to claim 12, a power supply system according to claim 1 and a control method therefor according to claim 11.

According to one aspect of the disclosure, there is described a power supply system for an electric vehicle, comprising: a battery system comprising a plurality of battery packs connected in parallel which is/are controlled by a Battery Management System (BMS) to connected to and disconnect from a high-voltage DC bus of the electric vehicle, wherein the battery system is configured to power the electric vehicle; a range extender configured to generate a DC current so as to charge the battery system and power the electric vehicle; a controller configured to control a power generating mode of the range extender, to control a connection status of each battery pack with the high-voltage DC bus of the electric vehicle, and to control a connection status of the range extender with the high-voltage DC bus of the electric vehicle. The power supply system further comprises a plurality of switches comprising a first switch and a second switch provided respectively for each battery pack, wherein the first switch being arranged between a respective battery pack and the high-voltage DC bus, one end of the second switch being connected to the range extender, and the other end of the second switch being connected to a respective battery pack and the first switch connecting said battery pack between said battery pack and said first switch. For each of the plurality of battery packs connected in parallel, when the first switch connected to the battery pack is switched on and the second switch connected to the battery pack is switched off, the battery pack is configured to power the electric vehicle; when the first switch connected to the battery pack is switched off and the second switch connected to the battery pack is switched on, the range extender is configured to charge the battery pack and when the first switch and the second switch connected to the battery pack are switched on, the range extender and the battery are configured to power the electric vehicle simultaneously.

According to another aspect of this disclosure, there is described an electric vehicle, which utilizes the power supply system for an electric vehicle according to any embodiment of this disclosure, and/or which is controlled by the control method according to any embodiment of this disclosure.

According to still another aspect of this disclosure, there is described a control method for a power supply system for an electric vehicle, which comprises using the power supply system for an electric vehicle according to any embodiment of this disclosure to power the electric vehicle.

This disclosure may use a parallel battery system together with a range extender to power an electric vehicle. Multiple battery packs in the battery system are connected in parallel, featuring modularization, integration/easy maintenance, and high reliability. Moreover, the voltages of the multiple battery packs connected in parallel can be equalized by the control over the range extender, so that the battery system can be flexibly arranged on the electric vehicle, thereby simplifying the integrated design of the whole vehicle. Also, a failure on a single battery pack will not affect the operation of the electric vehicle. The failed battery pack can be simply replaced; new and old battery packs can be used together in parallel; and battery packs of different materials and different capacities can be used together in parallel. In a word, this disclosure is of considerable industrial significance.

Therefore, this disclosure provides a novel solution in developing electric vehicles. It may solve such problems as the modularization on battery packs, the replacement of battery pack, and the use of battery packs in parallel, while effectively solving a pure electric vehicle's problem known as "range anxiety".

Detailed descriptions of exemplary embodiments are given below by taking reference to the drawings. Other features and aspects of this disclosure will become apparent.

### BRIEF DESCRIPTION OF THE DRAWINGS

The drawings, which are included in the specification and form part of the specification, show, together with the specification, the exemplary embodiments, features and aspects of the disclosure, and are used to explain the principles of the disclosure.
Fig. 1 shows a structural diagram of a power supply system for an electric vehicle according to an embodiment of the disclosure.
Fig. 2 shows a flowchart of a control method for a power supply system for an electric vehicle according to an embodiment of this disclosure.
Fig. 3 shows a flow chart of the main control software in a control method for a power supply system for an electric vehicle according to an embodiment of this disclosure works.
Fig. 4 shows a flow chart of the range-extended mode in a control method for a power supply system for an electric vehicle according to an embodiment of this disclosure.
Fig. 5 shows a flow chart of an equalizing mode in a control method for a power supply system for an electric vehicle according to an embodiment of this disclosure.

### DETAILED DESCRIPTION

Various exemplary embodiments, features, and aspects of the present disclosure will be described in detail with reference to the attached drawings. Same reference numerals in the drawings indicate elements of the same or similar functions. Although various aspects of the embodiments are shown in the attached drawings, unless otherwise specified, the drawings are not necessarily drafted in proportion.

Herein, the special term "exemplary" means "used as an example, an embodiment, or illustration". Any embodiment described to be "exemplary" here shall not necessarily to be interpreted as preferable or better as compared to other embodiments.

In addition, to better describe the present disclosure, numerous details are provided in the embodiments described below. A person skilled in the art should understand that, the present disclosure can be implemented without some of the details. In some embodiments, methods, means, elements and circuits known by a person skilled in the art are not described in detail, so as to emphasize the subject of the present disclosure.

### Embodiment 1

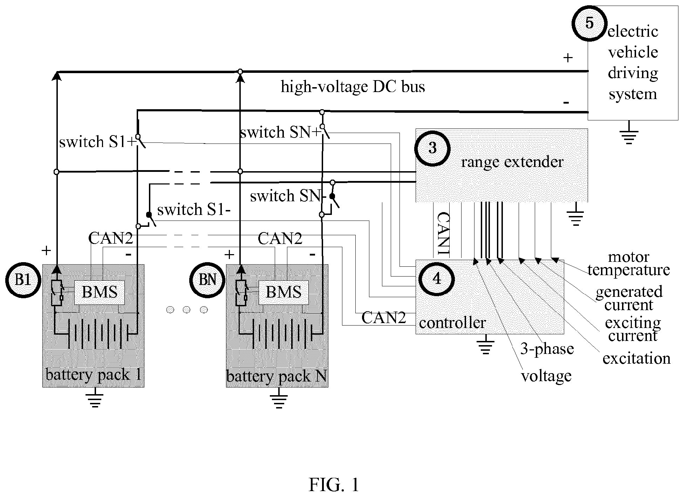

Fig. 1 shows a structural diagram of a power supply system for an electric vehicle according to an embodiment of the disclosure. As shown in Fig. 1, the power supply system comprises:
a battery system comprising one battery pack or a plurality of battery packs connected in parallel which is/are controlled by a Battery Management System (BMS) to connect to and disconnect from a high-voltage DC bus of the electric vehicle, wherein the battery system is configured to power the electric vehicle;
a range extender configured to generate a DC current so as to charge the battery system and/or power the electric vehicle. Specifically, the range extender is capable of DC power generation to generate a DC current, so as to charge one or all of the battery packs of the battery system. The range extender may also power the electric vehicle while charging the battery pack(s);
a controller configured to control a power generating mode of the range extender, to control a connection status of each battery pack with the high-voltage DC bus of the electric vehicle, and/or to control a connection status of the range extender with the high-voltage DC bus of the electric vehicle. In addition, the controller can adjust the current generated by the range extender, control the operational noise by the range extender, and control the range extender to charge one certain battery pack or to charge multiple battery packs simultaneously; and
a plurality of switches arranged between each battery pack and the high-voltage DC bus of the electric vehicle, and/or between the range extender and the high-voltage DC bus of the electric vehicle.

For instance, the battery pack B1 may connect to or disconnect from the high-voltage DC bus via the switch S1+, and may connect to or disconnect from the range extender via the switch S1-. The range extender 3 may generate power to charge the battery pack B1 or all the battery packs, and may partially power the electric vehicle while charging the battery packs. The controller 4 may monitor the voltage of each battery pack or control connection/ disconnection between the battery pack and the high-voltage DC bus via a Controller Area Network (CAN), such as a CAN2 bus. If it is determined that the battery pack B1 needs to be charged, the range extender 3 will be controlled to charge the battery pack B1.

Also, the controller 4 may also manage the operational noise by the range extender according to a comprehensive variation of the needs of charging and of powering the electric vehicle. Specifically, the controller controls the power generation by the range extender, where different generated currents are output according to the actual needs; it also controls the operational mode of the range extender via CAN1 communication, thereby managing the operational noise. For example, the controller connects one or more designated battery packs to the high-voltage DC bus by the switches S1+ to SN+ to power the electric vehicle, or controls the switches S1- to SN- to have one or more designated battery packs connected to the range extender, so as to charge the battery packs.

In this embodiment, each battery pack includes a main switch and a pre-charging switch in its inside. The main switch can connect the battery pack to or disconnect it from the high-voltage DC bus. The pre-charging switch serves to charge a system capacitor via a pre-charging resistor before the main switch is switched on. The main switch and the pre-charging switch are both controlled by the BMS. The BMS in the battery pack receives an instruction from the controller via a CAN2 communication, so as to control connection/disconnection of the battery pack.

In this embodiment, the range extender is an on-board DC power generating device. The range extender includes at least one of a fuel generator, a natural gas generator, an alcohol ether generator, a compressed-air generator, and a hydrogen fuel cell generator. The range extender is configured to provide a generated current to charge the battery packs, to power the electric vehicle, or to charge the battery packs and power the electric vehicle simultaneously.

In a possible embodiment, the plurality of switches comprise a first switch group and a second switch group. The first switch group includes at least one first switch, and the second switch group includes at least one second switch. The first switch is arranged between the battery pack and the high-voltage DC bus. The second switch is arranged between the battery pack and the range extender.

In a possible embodiment, the controller is configured to control a power generating mode of the range extender; and to control a status of each first switch and/or each second switch according to the voltage of the respective battery pack, so as to control a connection status of the respective battery pack with the high-voltage DC bus, and/or to control a connection status of the respective battery pack with the range extender.

Specifically, the controller can have one or more designated battery packs connected to or disconnected from the high-voltage DC bus by controlling a designated first switch. The controller can also have one or more designated battery packs connected to or disconnected from the range extender by controlling a designated second switch.

For example, the plurality of switches can also be referred as battery isolating switches. As shown in Fig. 1, the first switches included in the first switch group may be switches S1+ to SN+. The second switches included in the second switch group may be switches S1- to SN-. With the control by the controller, the switches S1+ to SN+ serve to switch the connections between the battery packs and the high-voltage DC bus on and off, or to switch the connections between a battery pack and the others via the high-voltage DC bus on and off. The switches S1- to SN- serve to switch the connections between the battery packs and the range extender on and off.

In this embodiment, the controller ensures that no less than one battery pack is connected to the high-voltage DC bus when the system is started up, so as to power the electric vehicle. When the range extender is controlled by the controller to power the electric vehicle by regular power generation, a constant-power mode is employed to ensure the optimum power generation efficiency.

In this embodiment, the controller may detect the voltage of each battery pack to determine whether the voltages are consistent among the battery packs. The connection status among the battery packs, the high-voltage DC bus and the range extender can be controlled depending on the voltages of the respective battery packs. For example, the following cases may exist.

Case I: The voltages of the battery packs are consistent.

If the voltages of the plurality of battery packs are consistent, the battery packs may be connected simultaneously to the high-voltage DC bus so as to power the electric vehicle. In this case, the range extender may not work (i.e. a pure electric mode), or may work in a constant-power mode (i.e. a range-extended mode). The current generated by the range extender may power the electric vehicle directly, charge the battery packs simultaneously, or charge the battery packs simultaneously while powering the electric vehicle. In the range-extended mode, the switches are switched on at the same time.

In a possible embodiment, the controller is also configured to control the BMS via CAN2 commands to connect all the battery packs to the high-voltage DC bus; control all the first switches between the battery packs and the high-voltage DC bus to be switched on; control all the second switches between the battery packs and the range extender to be switched off; and control the range extender to enter a stop mode, so that the electric vehicle works in the pure electric mode.

In a possible embodiment, the controller is also configured to control the BMS via CAN2 commands to connect all the battery packs to the high-voltage DC bus; control all the first switches between the battery packs and the high-voltage DC bus to be switched on; control all the second switches between the battery packs and the range extender to be switched on; and control the range extender to enter a constant-power mode, so that the electric vehicle works in the range-extended mode.

Furthermore, when working in the range-extended mode, the controller is configured to control, according to the power consumption and/or the speed of the electric vehicle, the range extender to enter a rated-power mode or a half-power mode.

Furthermore, when working in the range-extended mode, the controller is configured to control the electric vehicle to enter a limp-home mode where the speed of the vehicle is limited to a limp-home speed, in the case that the battery system is in a depleted status and the power generated by the range extender in the rated-power mode is less than the power consumed by the electric vehicle, so that the power consumed by the electric vehicle is less than the power generated by the range extender in the rated-power mode.

Case II: The voltages of the battery packs are not consistent.

Immediately after the electric vehicle is powered on, the controller detects the voltages and the status of charge (SoC) of the respective battery packs through CAN2 communication. If the voltages of the multiple battery packs are not consistent, the battery pack with the highest voltage is connected to the high-voltage DC bus first to power the electric vehicle. If the voltage of one of the battery packs is lower than the voltage of the other battery packs, the range extender is activated to charge that battery pack until its voltage is consistent with the voltage of the other battery packs, and then that battery pack is connected to the high-voltage DC bus to power the electric vehicle. When the range extender is controlled by the controller to generate power for charging the battery packs, the generated current will be reduced gradually after a target voltage has been reached.

In a possible embodiment, the controller is also configured to, if the voltages of the battery packs are detected to be not consistent, control the BMS via the CAN2 command to connect a first battery pack with the highest voltage to the high-voltage DC bus; control the first switch connected to the first battery pack to be switched on; and control the second switch connected to the first battery pack to be switched off, so that the electric vehicle may enter an equalizing mode.

In this embodiment, the first battery pack with the highest voltage may be one or more. After the first battery pack with the highest voltage has been connected to the high-voltage DC bus, any of the following manners can be employed to perform equalizing.

In a first manner, the controller is configured to, in the equalizing mode, if the voltage of a second battery pack is lower than that of the high-voltage DC bus, take the voltage of the high-voltage DC bus as a first target voltage, control the BMS via the CAN2 command to connect the second battery pack to the high-voltage DC bus, control the first switch connected to the second battery pack to be switched off and the second switch connected to the second battery pack to be switched on, so that the range extender charges the second battery pack. If the voltage of the second battery pack increases and reaches the first target voltage, the first switch connected to the second battery pack is controlled to be switched on, so as to connect the second battery pack to the high-voltage DC bus.

In a second manner, the controller is configured to, in the equalizing mode, if the voltage of the second battery pack is higher than that of the high-voltage DC bus, take the voltage of the second battery pack as a second target voltage, control the second switch between the range extender and the first battery pack to be switched on, control the range extender to enter a power-following mode, so as to increase the voltage of the high-voltage DC bus by reducing the load of the first battery pack. If the voltage of the high-voltage DC bus increases to the second target voltage, the first switch connected to the second battery pack is controlled to be switched on, so as to connect the second battery pack to the high-voltage DC bus.

The second battery pack refers to a battery pack other than the first battery pack among the battery packs. As shown in Fig. 1, the battery system includes a plurality of battery packs marked as B1 to BN. If the first battery pack is the battery pack B1, the second battery pack may be one of the battery packs B2 to BN.

For example, if the plurality of battery packs contain three or more battery packs and two battery packs B 1 and B2 have voltages lower than the voltage of the high-voltage DC bus, then the range extender first charges the battery pack B1, while the battery pack B2 of low voltage is disconnected and isolated. After the battery pack B1 has been charged and connected to the high-voltage DC bus, the range extender starts the charging for the battery pack B2 until it is fully charged, and then the battery pack B2 is connected to the high-voltage DC bus.

In a possible embodiment, when working in the equalizing mode, the controller is further configured to control the range extender to enter a constant-voltage mode to charge the second battery pack, if the voltage of the second battery pack is lower than that of the high-voltage DC bus.

In a possible embodiment, when working in the equalizing mode, the controller is further configured to control the range extender to enter a power-following mode if the voltage of the second battery pack is higher than that of the high voltage DC bus, thereby increasing the voltage of the high-voltage DC bus by reducing the load of the first battery pack.

The power supply system of an electric vehicle according to the disclosure employs a parallel battery system in combination with a range extender for power supply. The multiple battery packs in the battery system are connected in parallel, thus featuring modularization, integration/ easy maintenance and high reliability. Besides, by a control over the range extender, the voltages of multiple battery packs in parallel can be equalized, so that the battery system can be flexibly arranged on the electric vehicle, and the integrated design of the whole vehicle can be simplified. Moreover, a failure of a single battery pack has no influence on the operation of the electric vehicle. The replacement of the failed battery pack is simple. Besides, new and old batteries or batteries of different capacities or different characteristics can be used together. In a word, the disclosure is of considerable industrial significance.

Therefore, this disclosure provides a novel solution in developing electric vehicles. It solves such problems as the modularization on battery packs, the replacement of battery pack, and the use of battery packs in parallel, while effectively solving a pure electric vehicle's problem known as "range anxiety".

### Embodiment 2

Based on the power supply system for an electric vehicle as described above, this embodiment explains the principle of the battery packs powering the electric vehicle with examples by taking reference to Fig. 1.

For example, when the electric vehicle has been started up, if the voltages of all the battery packs B1 to BN are equalized (i.e., of a consistent voltage), the respective battery packs can be connected to the high-voltage under the control by the BMS via CAN2 communication; the controller 4 switches the switches S1+ to SN+ on, so that all the battery packs B1 to BN power the electric vehicle simultaneously. Switches S1- to SN- remain off, so the electric vehicle works in a pure electric mode.

For another example, when the electric vehicle has been started up, if the voltage of the battery pack BN is the highest, the controller 4 controls the BMS via CAN2 communication to connect the battery pack BN to the high-voltage DC bus; meanwhile the controller 4 switches on the switch SN+ directly so that the battery pack BN powers the electric vehicle first. At the same time, the controller 4 monitors the voltages of the other battery packs such as the battery pack B1 via the CAN2 bus. As the voltage of the battery pack BN drops to that of the battery pack B1 due to discharging, the controller 4 immediately switches on the switch S1+ to connect the battery pack B1 to the high-voltage DC bus, and add it to the powering for the electric vehicle.

As another example, if the controller 4 determines that the voltage of the battery pack B1 is far lower than that of the battery pack BN with the highest voltage, and the battery pack BN needs to be discharged for a long time in order to reach a voltage consistence, then the controller 4 immediately switches on the switch S1- while keeping the switch S1+ off, and controls the range extender 3 to generate power and charge the battery pack B1 to increase its voltage gradually. When the voltage of the battery pack B 1 is approaching to that of the battery pack BN (the target voltage), the switch S1+ is switched on to add the battery pack B1 to the powering for the electric vehicle. During the process, the electric vehicle is working in the equalizing mode (also known as the equalizing charging mode). After the equalizing has been completed, if the range extender stops generating power, the electric vehicle will enter a pure electric mode.

### Embodiment 3

This embodiment differs from the above embodiments in that the controller 4 controls the range extender 3 to enter a constant-power mode and participate in the powering for the electric vehicle directly during the driving of the electric vehicle. Based on the powering primarily by the battery system, the range extender 3 also supplies part of the power to the vehicle, reducing the load of the battery system effectively and extending the driving range of the vehicle.

As an example, when the electric vehicle has been started up, if the voltages of all the battery packs B1 to BN are equalized (i.e., of a consistent voltage), the controller 4 switches the switches S1+ to SN+ on, thus all the battery packs B1 to BN power the electric vehicle simultaneously. Besides, the range extender 3 works in the constant-power mode with switches S1- to SN- switched on, making the electric vehicle work in the range-extended mode.

As another example, when the state of charge (SoC) of the battery system is lower than a given level, e.g., 30%, the controller 4 immediately controls to activate the range extender 3 to enter the constant-power mode. At the same time, the controller 4 monitors the speed and power consumption of the vehicle. If the vehicle runs at a high speed (e.g., higher than 80km/h) and its power consumption is greater than the rated power of the range extender 3, the controller 4 controls the range extender 3 to work in a constant rated-power mode. If the vehicle runs at a speed lower than a given speed, e.g., 60km/h, or the power consumption of the vehicle is lower than the half power of the range extender 3, the controller 4 controls the range extender 3 to work in a half-power mode with lower power. At this point, operational noise by the range extender 3 decreases sharply, making the vehicle more comfortable.

In this embodiment, the range extender 3 and the battery system power the electric vehicle simultaneously, and the vehicle works in the range-extended mode (also known as range-extended driving mode).

In a possible embodiment, the range extender 3 enters a stop mode when the vehicle stops (e.g. for traffic light) or runs at a speed lower than a given speed, e.g., 20km/h, so as to eliminate the operational noise of the range extender.

In a possible embodiment, when the power generated by the range extender 3 in the constant-power mode is greater than the power consumed by the vehicle, the surplus power is used to charge the battery system.

In a possible embodiment, when the battery system is in a depleted status due to discharging (for example, if its SoC (remaining power) is less than 10%), and the rated power of the range extender 3 is less than the power consumed by the electric vehicle, then the electric vehicle enters the limp-home mode where the speed is limited to a limp-home speed, making power consumption lower than the rated power of the range extender 3.

### Embodiment 4

This embodiment differs from the above embodiments in that the entire battery system in this embodiment comprises a plurality of battery packs B1 to BN connected in parallel, wherein each battery pack can be mounted or removed individually. This structure enables a replacement of one or more battery packs among the battery packs B1 to BN when being repaired. Except for a same voltage specification, the newly replaced battery pack does not have to be of the same status of health (SoH) as the old one, nor does the newly replaced battery pack have to be of the same capacity or the same material as the old one.

In particular, a plurality of battery packs having the same voltage specification generally means that each of the plurality of battery packs has the same nominal voltage, which is the same as the nominal voltage of the high-voltage DC bus as well. Each of the plurality of battery packs may or may not have the same capacity, the same material, the same status of health, etc.

In a possible embodiment, if the battery pack BN is replaced by a new battery pack of the same voltage level but with a smaller capacity, then the new battery pack may have a higher open circuit voltage and hence be connected to the high-voltage DC bus first when the electric vehicle is started up, to power the electric vehicle. However, due to the small capacity, the voltage of the battery pack will drop sharply below the voltages of the other battery packs when discharging with a large current, which makes the other battery packs unable to be connected to the high-voltage DC bus. At this point, the controller 4 controls the range extender 3 to be activated and the switch SN- to be switched on, so as to start the power generation and charge the battery pack BN rapidly, increasing the voltage by reducing the discharging current of the battery lack. When the voltage of the new battery pack is approaching to those of the other battery packs, the controller 4 controls the other battery packs to connect to the high-voltage DC bus quickly.

In a possible embodiment, if the battery pack BN is replaced by an old battery pack of the same voltage level, the old battery pack may have a higher open circuit voltage and hence be connected to the high-voltage DC bus first when the electric vehicle is started up, to power the electric vehicle. However, due to the high internal resistance, the voltage of the old battery pack will drop sharply below the voltages of other battery packs when discharging with a large current, which makes the other battery packs unable to be connected to the high-voltage DC bus. The controller 4 will connect the other battery packs to the high-voltage DC bus by the same control strategy as described above.

The disclosure has features enabling the use of battery packs connected in parallel on the electric vehicle, thereby effectively solving the problem that battery packs with the same voltage level but with different status of charge, different capacities and different status of health cannot be used, especially in parallel, on the same electric vehicle. As a result, the replacement and repair of the battery packs for an electric vehicle become easier, making it convenient to add battery packs contemporarily for increasing the driving range.

### Embodiment 5

This embodiment differs from the above embodiments in that, if one of the multiple battery packs B1 to BN in the battery system fails to work due to a severe fault, the controller 4 will automatically recognize the failure from an error code reported by the CAN2 bus and disconnect the battery pack from the high-voltage DC bus to stop the powering by that battery pack. At this time, the remained battery packs in the battery system will continue to power the electric vehicle without having a sudden stop of driving.

In a possible embodiment, when a severe failure of a battery pack has been detected, the controller disconnects the battery pack from the high-voltage DC bus until the battery pack recovers from the failure. For example, in a case where a plurality of battery packs are simultaneously connected to the high-voltage DC bus to power the electric vehicle, when a severe failure of the battery pack BN has been detected in the operation, the switches SN+ and SN- will be switched off, thereby isolating the battery pack BN while the other battery packs can keep powering the electric vehicle.

In a possible embodiment, after the failed battery pack has been disconnected, the controller 4 immediately activates the range extender 3 for power generation, to reduce the possibility of overloading the other battery packs due to the removing of the failed battery pack.

The power supply system for an electric vehicle provided in this disclosure features a modularization of a battery system and the ease of integration/maintenance. Therefore, it makes the commercial develop and use of range-extended electric vehicles more convenient and economical, effectively solves the problem of "range anxiety" about a pure electric vehicle while solving the cost bottleneck in the production, replacement and echelon use of a battery system, showing considerable industrial significance.

### Embodiment 6

The disclosure also provides an electric vehicle that comprises the power supply system for an electric vehicle according to any of the embodiments of this disclosure; and/or that is controlled by the control method of the embodiments of this disclosure.

### Embodiment 7

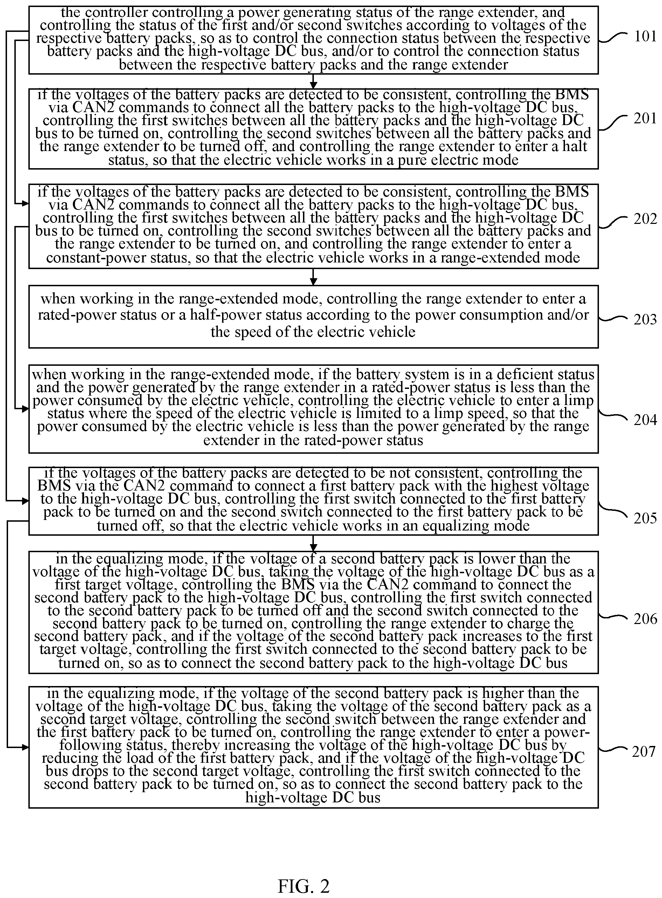

Fig. 2 shows a flowchart of the control method of the power supply system for an electric vehicle according to an embodiment of this disclosure. As shown in Fig. 2, the control method of the power supply system for an electric vehicle uses the power supply system for an electric vehicle according to any of the embodiments of this disclosure to power an electric vehicle. The method may comprise step 101.

In step 101, the controller controls a power generating mode of the range extender, and controls the status of the first and/or second switches according to voltages of the respective battery packs, so as to control the connection status between the respective battery packs and the high-voltage DC bus, and/or to control the connection status between the respective battery packs and the range extender.

In a possible implementation, step 101 comprises:
step 201 of, if the voltages of the battery packs are detected to be consistent, controlling the BMS via CAN2 commands to connect all the battery packs to the high-voltage DC bus, controlling the first switches between all the battery packs and the high-voltage DC bus to be switched on, controlling the second switches between all the battery packs and the range extender to be switched off, and controlling the range extender to enter a stop mode, so that the electric vehicle works in a pure electric mode; or
step 202 of, if the voltages of the battery packs are detected to be consistent, controlling the BMS via CAN2 commands to connect all the battery packs to the high-voltage DC bus, controlling the first switches between all the battery packs and the high-voltage DC bus to be switched on, controlling the second switches between all the battery packs and the range extender to be switched on, and controlling the range extender to enter a constant-power mode, so that the electric vehicle works in a range-extended mode.

In a possible implementation, subsequent to step 202, the method further comprises:
step 203 of, when working in the range-extended mode, controlling the range extender to enter a rated-power mode or a half-power mode according to the power consumption and/or the speed of the electric vehicle.

In a possible implementation, subsequent to step 202, the method further comprises:
step 204 of, when working in the range-extended mode, if the battery system is in a depleted status and the power generated by the range extender in a rated-power mode is less than the power consumed by the electric vehicle, controlling the electric vehicle to enter a limp-home mode where the speed of the electric vehicle is limited to a limp-home speed, so that the power consumed by the electric vehicle is less than the power generated by the range extender in the rated-power mode.

In a possible implementation, step 101 further comprises:
step 205 of, if the voltages of the battery packs are detected to be not consistent, controlling the BMS via the CAN2 command to connect a first battery pack with the highest voltage to the high-voltage DC bus, controlling the first switch connected to the first battery pack to be switched on and the second switch connected to the first battery pack to be switched off, so that the electric vehicle works in an equalizing mode.

In a possible implementation, subsequent to step 205, the method further comprises:
step 206 of, in the equalizing mode, if the voltage of a second battery pack is lower than the voltage of the high-voltage DC bus, taking the voltage of the high-voltage DC bus as a first target voltage, controlling the BMS via the CAN2 command to connect the second battery pack to the high-voltage DC bus, controlling the first switch connected to the second battery pack to be switched off and the second switch connected to the second battery pack to be switched on, controlling the range extender to charge the second battery pack, and if the voltage of the second battery pack increases to the first target voltage, controlling the first switch connected to the second battery pack to be switched on, so as to connect the second battery pack to the high-voltage DC bus; or
step 207 of, in the equalizing mode, if the voltage of the second battery pack is higher than the voltage of the high-voltage DC bus, taking the voltage of the second battery pack as a second target voltage, controlling the second switch between the range extender and the first battery pack to be switched on, controlling the range extender to enter a power-following mode, thereby increasing the voltage of the high-voltage DC bus by reducing the load of the first battery pack, and if the voltage of the high-voltage DC bus increases to the second target voltage, controlling the first switch connected to the second battery pack to be switched on, so as to connect the second battery pack to the high-voltage DC bus.

The second battery pack refers to a battery pack other than the first battery pack among the battery packs.

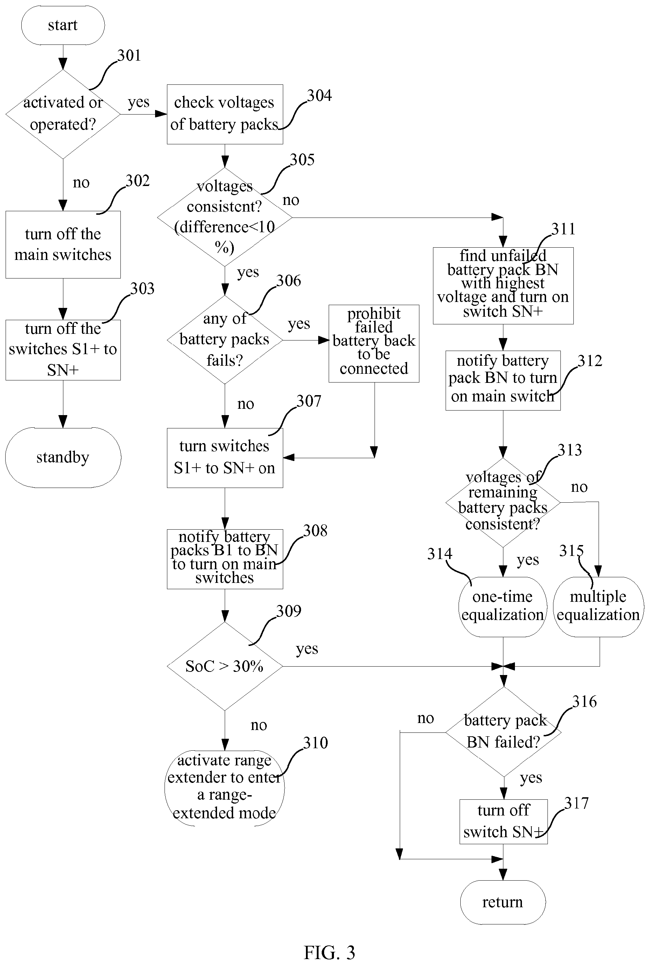

An example flow of controlling and managing the power supply system for an electric vehicle by a main control software is described with reference to Fig. 3 as follows.

Immediately after being powered on, the controller 4 checks whether the battery system needs to be activated or operated (301). If it does not need to be activated or operated, the controller 4 enters a standby status after confirming that the main switches in the battery packs keep off (302, notifying battery packs B1 to BN to switch off the main switches by CAN2 communication) and reconfirming that the switches S1+ to SN+ connected to the high-voltage DC bus are off (303, switching off the switches S1+ to SN+ connected to the high-voltage DC bus).

Upon receiving an activation command, the controller 4 immediately checks the voltages of the respective battery packs by CAN2 communication (304) and determines whether they are consistent (305). If the voltages are consistent, it is determined whether any of the battery packs fails (306), and the failed battery back is prohibited to be connected. After confirming that none of the battery packs fails, the switches S1+ to SN+ connected to the high-voltage DC bus are first switched on (307), and then the battery packs are notified via a CAN2 bus to have the main switches switched on (308). At this time, all the battery packs are simultaneously connected to the high-voltage DC bus to power the electric vehicle. During the driving, if the controller 4 detects that the status of charge (SoC) of the battery becomes the depleted status (e.g., SoC<30%) (309), the range extender is activated to enter a range-extended mode (310).

If the voltages of the battery packs are not consistent, the unfailed battery pack BN with the highest voltage is found out first and the switch SN+ between the battery pack BN and the high-voltage DC bus is switched on (311). Then, the battery pack BN is notified via a CAN2 bus to have the main switch switched on (312), making that battery pack start to power the electric vehicle. Meanwhile, the controller 4 continues to check whether the voltages of the remaining battery packs are of an equalized status (313). If the voltages of all the remaining battery packs are consistent, the process proceeds to a single equalization (also called one-time equalization) control (314); or else, the process proceeds to a multiple equalization control (315).

After the equalization control has been completed, the controller 4 further checks whether any of the battery packs fails (316). If any failed battery pack BN is found, it is disconnected from the high-voltage DC bus-that is, the switch SN+ is switched off, and the other battery packs continue to power the electric vehicle to keep running.

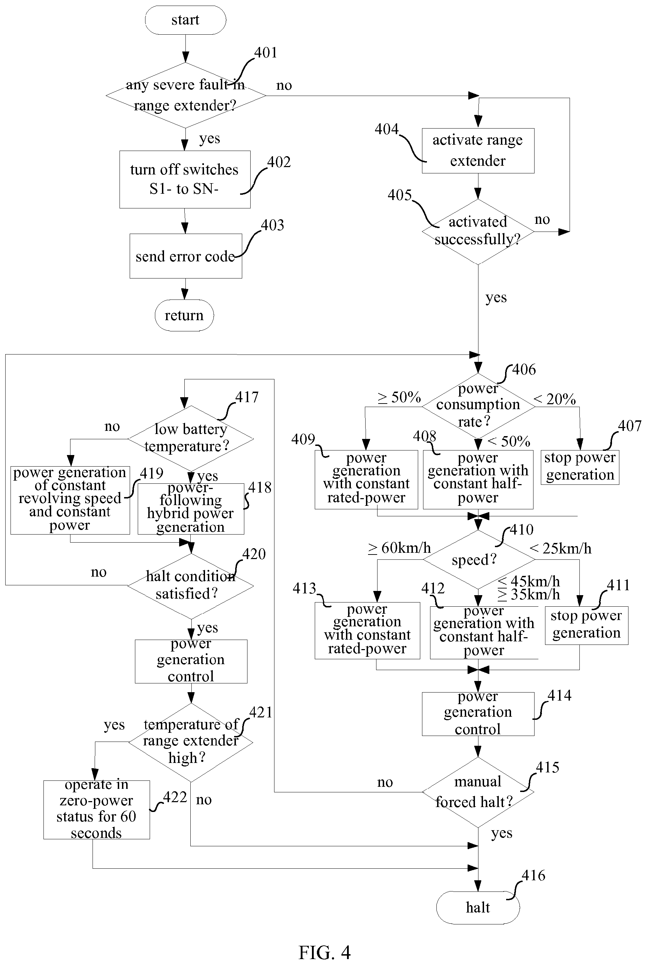

An example flow of implementing the range-extended mode with a sub-control software is described with reference to Fig. 4 as follows.

First, after entering the range-extended mode, it is firstly checked if there is any severe fault in the range extender 3 (401). If any severe fault has been confirmed, after confirming that the switches between the range extender 3 and the high-voltage DC bus (switches S1- to SN-) have been switched off (402), an error code can be sent (403), returning to the main control software. Or else, the range extender 3 is activated (404).

After confirming that the range extender 3 has been activated successfully (405), the sub-control software immediately checks the actual power consumption state of the electric vehicle (406), so as to determine the mode for power generation by the range extender 3. If the power consumption rate of the vehicle is lower than 20%, the generated current is controlled to be zero, i.e. the power generation stops (407). If the power consumption rate of the vehicle is lower than 50%, the generated current is controlled to be half-current, i.e. power generation with constant half-power (408). If the power consumption rate of the vehicle is greater than 50%, the power generation is of constant rated-power (409).

The speed of the electric vehicle is checked (410), so as to determine the mode for power generation by the range extender 3. If the speed is less than 25km/h, the range extender 3 is controlled to stop generating power (411). If the speed is higher than 35km/h but lower than 45km/h, the range extender 3 is controlled to generate power with constant half-power (412). If the speed is higher than 60km/h, the range extender 3 is controlled to generate power with constant rated-power (413). Consequently, the determined control on power generation can be applied to the range extender 3 (414).

The above-mentioned power consumption rate and vehicle speed can determine the mode of the range extender 3 individually or in combination. When determining the mode of the range extender 3 in combination, the lower one of two determined powers from the power consumption rate and the speed is usually chosen. For example, if from the vehicle speed it is determined that the range extender 3 should work with a constant rated-power, and from the power consumption rate it is determined that the range extender 3 should work with a constant half-power, then after being combined, the range extender 3 is determined to work with a constant half-power.

If a manual forced halt has been detected (415), the controller 4 controls the range extender to enter a stop mode (416); or else, the controller 4 continues to monitor the temperature of the battery packs (417). If the temperature of the battery packs is at a preset status of low temperature (e.g., 0 °C), the generated power follows the actual power demand of the vehicle-that is, power-following hybrid power generation (418). If the temperature of the battery packs rises back to the normal operating temperature, the power generation is of constant revolving speed and constant power (419), for example, a constant rated-power mode.

If a halt condition for the range extender is satisfied (420), the temperature of the range extender is further checked (421). If the temperature is too high, the range extender is kept to operate in a zero-power status for a while (e.g., 60 seconds) (422) and then is halted (416). Otherwise, the system rechecks the power consumption rate of the vehicle and returns to the power generation controlling status.

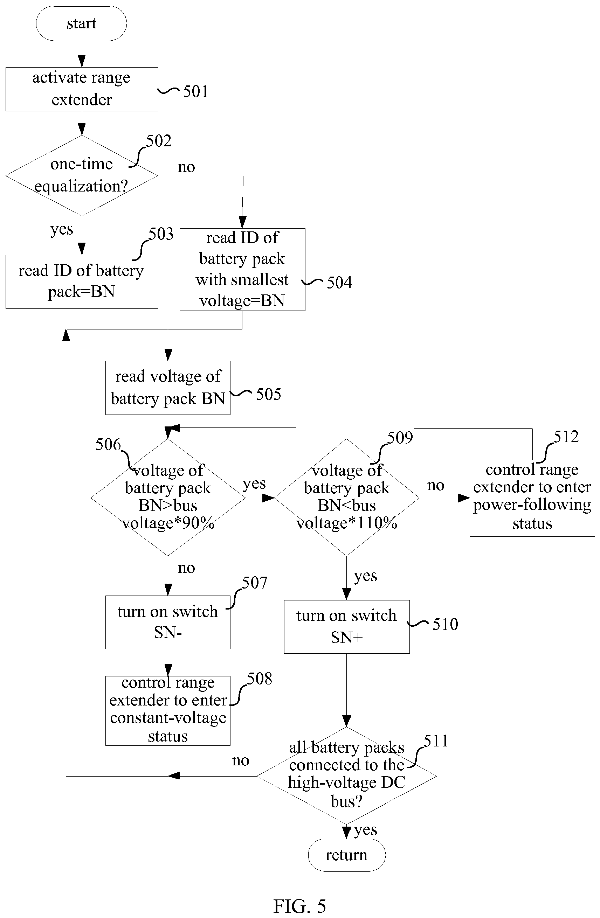

An example flow of the sub-control software in a control mode of equalizing charging (the equalizing mode) is described with reference to Fig. 5 as follows.

First, when the vehicle begins to work in the equalizing mode, the range extender 3 is activated (501) to be prepared to generate power. Then, a determination may be made about whether a one-time equalization is needed (502). If so, the ID of the battery pack is read (503). If multiple equalizations are needed, the ID of the battery pack with the smallest voltage may be read (504). After determining the battery pack that needs the equalizing, e.g., the battery pack BN, the actual voltage of the battery pack is checked to determine the power and work mode of the range extender for the equalization.

The voltage of the battery pack BN is read (505). If it is determined that the voltage of the battery pack BN is far below the voltage of the high-voltage DC bus (e.g., the voltage of the battery pack BN/the voltage of the high-voltage DC bus < 0.9) (506), the range extender is controlled to enter a constant-voltage mode (508) after having the switch SN- switched on (507). If it is determined that the voltage of the battery pack BN is within an allowable range of the voltage of the high-voltage DC bus (e.g., 0.9 < the voltage of the battery pack BN/the voltage of the high-voltage DC bus < 1.1) (509), the switch SN+ connected to the high-voltage DC bus is switched on (510) to connect the battery pack BN to the high-voltage DC bus, so as to power the electric vehicle. It is determined if all the battery packs have been connected to the high-voltage DC bus (511). If so, the process returns. If not, the process continues to perform the equalizing on the other battery packs.

If the voltage of the battery pack BN exceeds that of the high-voltage DC bus (e.g., the voltage of the battery pack BN/the voltage of the high-voltage DC bus voltage>1.1), the equalizing charging to the battery pack BN stops; rather, the range extender 3 is controlled to enter a power-following mode (512), reducing the load of the battery packs that have been connected to the high-voltage DC bus, recovering and increasing the voltages of the battery packs.

On the premise of implementing the equalizing charging for battery packs in parallel, the technical solution of the disclosure makes it possible to provide continuous DC power generations as needed, including generations in a constant-power mode, a constant-voltage mode, a power-following mode, etc., as well as serving as an auxiliary power source for a pure electric vehicle.

Various embodiments of this disclosure have been described above. The above description is exemplary, not exhaustive. This disclosure is not limited to those embodiments. The terms used herein are intended to best explain the principles and practical applications of the embodiments, and explain how they improve the techniques in the market, or to enable those skilled in the art to understand the embodiments.

## Claims

1. A power supply system for an electric vehicle, comprising:
a battery system comprising a plurality of battery packs (B1, BN) connected in parallel which is/are controlled by a Battery Management System (BMS) to be connected to and disconnected from a high-voltage DC bus of the electric vehicle, wherein the battery system is configured to power the electric vehicle;
a range extender (3) configured to generate a DC current so as to charge the battery system and power the electric vehicle; and
a controller (4) configured to control a power generating mode of the range extender (3), to control a connection status of each battery pack (B1, BN) with the high-voltage DC bus of the electric vehicle, and to control a connection status of the range extender (3) with the high-voltage DC bus of the electric vehicle;
**characterized in that**,
the power supply system further comprising a plurality of switches comprising a first switch (S1+, SN+) and a second switch (S1-, SN-) provided respectively for each battery pack (B1, BN), wherein the first switch (S1+, SN+) being arranged between a respective battery pack (B1, BN) and the high-voltage DC bus, one end of the second switch (S1-, SN-) being connected to the range extender (3), and the other end of the second switch (S1-, SN-) being connected to a respective battery pack (B1, BN) and the first switch (S1+, SN+) connecting said battery pack (B1, BN) at a position between said battery pack (B1, BN) and said first switch (S1+, SN+), and
for each of the plurality of battery packs (B1, BN) connected in parallel, when the first switch (S1+, SN+) connected to the battery pack (B1, BN) is switched on and the second switch (S1-, SN-) connected to the battery pack (B1, BN) is switched off, the battery pack (B1, BN) is configured to power the electric vehicle; when the first switch (S1+, SN+) connected to the battery pack (B1, BN) is switched off and the second switch (S1-, SN-) connected to the battery pack (B1, BN) is switched on, the range extender (3) is configured to charge the battery pack (B1, BN); and when the first switch (S1+, SN+) and the second switch (S1-, SN-) connected to the battery pack (B1, BN) are switched on, the range extender and the battery pack (B1, BN) are configured to power the electric vehicle simultaneously.

2. The power supply system according to claim 1, wherein the range extender (3) comprises one of a fuel generator, a natural gas generator, an alcohol ether generator, a compressed-air generator, and a hydrogen fuel cell generator, and
the range extender (3) is configured to provide an electrical current to charge the battery pack (B1, BN), to power the electric vehicle, or to charge the battery pack (B1, BN) and power the electric vehicle simultaneously.

3. The power supply system according to claim 1, wherein the controller (4) is configured to control the power generating mode of the range extender (3), and control a status of each first switch (S1+, SN+) and each second switch (S1-, SN-) according to the voltage of the respective battery pack (B1, BN), so as to control the connection status of the respective battery pack (B1, BN) with the high-voltage DC bus, and to control the connection status of the respective battery pack (B1, BN) with the range extender (3).

4. The power supply system according to claim 3, wherein the controller (4) is further configured to, if the voltages of the battery packs (B1, BN) are detected to be consistent,
control the BMS via CAN2 commands to connect all the battery packs (B1, BN) to the high-voltage DC bus, control all the first switches (S1+, SN+) between the battery packs (B1, BN) and the high-voltage DC bus to be switched on, control all the second switches (S1-, SN-) between the battery packs (B1, BN) and the range extender (3) to be switched off, and control the range extender (3) to enter a stop mode, so that the electric vehicle works in a pure electric mode; or
control the BMS via CAN2 commands to connect all the battery packs (B1, BN) to the high-voltage DC bus, control all the first switches (S1+, SN+) between the battery packs (B1, BN) and the high-voltage DC bus to be switched on, control all the second switches (S1-, SN-) between the battery packs (B1, BN) and the range extender (3) to be switched on, and control the range extender (3) to enter a constant-power mode, so that the electric vehicle works in a range-extended mode.

5. The power supply system according to claim 4, wherein the controller (4) is further configured to, in the range-extended mode,
control the range extender (3) to enter a rated-power mode or a half-power mode according to a power consumption and/or a speed of the electric vehicle; or
if the battery system is in a depleted status and the power generated by the range extender (3) in the rated-power mode is less than the power consumed by the electric vehicle, control the electric vehicle to enter a limp-home mode where the speed of the electric vehicle is limited to a limp-home speed, so that the power consumed by the electric vehicle is less than the power generated by the range extender (3) in the rated-power mode.

6. The power supply system according to claim 3, wherein the controller (4) is further configured to, if the voltages of the battery packs (B1, BN) are detected to be not consistent, control the BMS via a CAN2 command to connect a first battery pack with the highest voltage to the high-voltage DC bus, and control the first switch (S1+, SN+) connected to the first battery pack to be switched on and the second switch (S1-, SN-) connected to the first battery pack to be switched off, so that the electric vehicle works in an equalizing mode.

7. The power supply system according to claim 6, wherein the controller (4) is further configured to, in the equalizing mode,
if the voltage of a second battery pack is lower than the voltage of the high-voltage DC bus, take the voltage of the high-voltage DC bus as a first target voltage, control the BMS via a CAN2 command to connect the second battery pack to the high-voltage DC bus, and control the first switch (S1+, SN+) connected to the second battery pack to be switched off and the second switch (S1-, SN-) connected to the second battery pack to be switched on, so that the second battery pack is charged by the range extender (3); and
if the voltage of the second battery pack increases and reaches the first target voltage, control the first switch (S1+, SN+) connected to the second battery pack to be switched on, so as to connect the second battery pack to the high-voltage DC bus,
wherein the second battery pack is a battery pack other than the first battery pack among the battery packs (B1, BN).

8. The power supply system according to claim 6, wherein the controller (4) is further configured to, in the equalizing mode,
if the voltage of a second battery pack is higher than the voltage of the high-voltage DC bus, take the voltage of the second battery pack as a second target voltage, control the second switch (S1-, SN-) between the range extender (3) and the first battery pack to be switched on, and control the range extender (3) to enter a power-following mode, so as to increase the voltage of the high-voltage DC bus by reducing a load of the first battery pack; and
if the voltage of the high-voltage DC bus increases to the second target voltage, control the first switch (S1+, SN+) connected to the second battery pack to be switched on, so as to connect the second battery pack to the high-voltage DC bus,
wherein the second battery pack is a battery pack other than the first battery pack among the battery packs (B1, BN).

9. The power supply system according to claim 1, wherein the controller (4) is configured to detect a voltage of each battery pack (B1, BN), and if the voltages of the battery packs (B1, BN) are detected to be consistent, then the first switches (S1+, SN+) for all the battery packs (B1, BN) are switched on.

10. The power supply system according to claim 1, wherein the controller (4) is configured to detect a voltage of each battery pack (B1, BN), and if the voltages of the battery packs (B1, BN) are detected to be not consistent, then the first switch (S1+, SN+) for a first battery pack which has the highest voltage among the battery packs (B1, BN) is switched on, while the first switches (S1+, SN+) for remaining battery packs (B1, BN) are switched off.

11. A control method for a power supply system for an electric vehicle, **characterized in that**, the control method comprises using the power supply system according to any one of claims 1 to 10 to power the electric vehicle.

12. An electric vehicle, **characterized in that**, the electric vehicle utilizes the power supply system according to any one of claims 1 to 10, and/or the electric vehicle is controlled by the control method according to claim 11.

## Patentansprüche

1. Leistungsversorgungssystem für ein Elektrofahrzeug, das Folgendes umfasst:
ein Batteriesystem, das mehrere Batteriepacke (B1, BN) umfasst, die parallel geschaltet sind, das/die durch ein Batteriemanagementsystem (BMS) gesteuert werden, um mit einem Hochspannungsgleichstrombus des Elektrofahrzeugs verbunden und von diesem getrennt zu werden, wobei das Batteriesystem konfiguriert ist, um das Elektrofahrzeug zu betreiben;
einen Reichweiten-Verlängerer (3), der konfiguriert ist, um einen Gleichstrom zu erzeugen, um das Batteriesystem zu laden und das Elektrofahrzeug zu betreiben; und
eine Steuervorrichtung (4), die konfiguriert ist, um einen Leistungserzeugungsmodus des Reichweiten-Verlängerers (3) zu steuern, einen Verbindungszustand jedes Batteriepacks (B1, BN) mit dem Hochspannungsgleichstrombus des Elektrofahrzeugs zu steuern und einen Verbindungszustand des Reichweiten-Verlängerers (3) mit dem Hochspannungsgleichstrombus des Elektrofahrzeugs zu steuern;
**dadurch gekennzeichnet, dass**
das Leistungsversorgungssystem ferner mehrere Schalter umfasst, die einen ersten Schalter (S1+, SN+) und einen zweiten Schalter (S1-, SN-) umfassen, die jeweils für jedes Batteriepack (B1, BN) bereitgestellt sind, wobei der erste Schalter (S1+, SN+) zwischen einem jeweiligen Batteriepack (B1, BN) und dem Hochspannungsgleichstrombus angeordnet ist, wobei ein Ende des zweiten Schalters (S1-, SN-) mit dem Reichweiten-Verlängerer (3) verbunden ist und das andere Ende des zweiten Schalters (S1-, SN-) mit einem jeweiligen Batteriepack (B1, BN) verbunden ist und der erste Schalter (S1+, SN+) den Batteriepack (B1, BN) an einer Position zwischen dem Batteriepack (B1, BN) und dem ersten Schalter (S1+, SN+) verbindet, und
für jeden der mehreren Batteriepacke (B1, BN), die parallel geschalten sind, wenn der erste Schalter (S1+, SN+), der mit dem Batteriepack (B1, BN) verbunden ist, eingeschaltet ist, und der zweite Schalter (S1-, SN-), der mit dem Batteriepack (B1, BN) verbunden ist, ausgeschaltet ist, der Batteriepack (B1, BN) konfiguriert ist, um das Elektrofahrzeug zu betreiben; wenn der erste Schalter (S1+, SN+), der mit dem Batteriepack (B1, BN) verbunden ist, ausgeschaltet ist, und der zweite Schalter (S1-, SN-), der mit dem Batteriepack (B1, BN) verbunden ist, eingeschaltet ist, der Reichweiten-Verlängerer (3) konfiguriert ist, um den Batteriepack (B1, BN) zu laden; und wenn der erste Schalter (S1+, SN+) und der zweite Schalter (S1-, SN-), die mit dem Batteriepack (B1, BN) verbunden sind, eingeschaltet sind, der Reichweiten-Verlängerer und der Batteriepack (B1, BN) konfiguriert sind, um das Elektrofahrzeug gleichzeitig zu betreiben.

2. Leistungsversorgungssystem nach Anspruch 1, wobei der Reichweiten-Verlängerer (3) einen Brennstofferzeuger, einen Erdgaserzeuger, einen Alkoholethererzeuger, einen Drucklufterzeuger oder einen Wasserstoff-Brennstoffzellen-Erzeuger umfasst, und
der Reichweiten-Verlängerer (3) konfiguriert ist, um einen elektrischen Strom bereitzustellen, um den Batteriepack (B1, BN) zu laden, um das Elektrofahrzeug zu betreiben, oder um den Batteriepack (B1, BN) zu laden und gleichzeitig das Elektrofahrzeug zu betreiben.

3. Leistungsversorgungssystem nach Anspruch 1, wobei die Steuervorrichtung (4) konfiguriert ist, um den Leistungserzeugungsmodus des Reichweiten-Verlängerers (3) zu steuern und einen Zustand jedes ersten Schalters (S1+, SN+) und jedes zweiten Schalters (S1-, SN-) gemäß der Spannung des jeweiligen Batteriepacks (B1, BN) zu steuern, um den Verbindungszustand des jeweiligen Batteriepacks (B1, BN) mit dem Hochspannungsgleichstrombus zu steuern und den Verbindungszustand des jeweiligen Batteriepacks (B1, BN) mit dem Reichweiten-Verlängerer (3) zu steuern.

4. Leistungsversorgungssystem nach Anspruch 3, wobei die Steuervorrichtung (4), falls die Spannungen der Batteriepacken (B1, BN) als konsistent erkannt werden, ferner zu Folgendem konfiguriert ist:
Steuern des BMS über CAN2-Befehle, um alle Batteriepacke (B1, BN) mit dem Hochspannungsgleichstrombus zu verbinden, Steuern aller der ersten Schalter (S1+, SN+) zwischen den Batteriepacken (B1, BN) und dem Hochspannungsgleichstrombus, um eingeschalten zu werden, Steuern aller der zweiten Schalter (S1-, SN-) zwischen den Batteriepacken (B1, BN) und dem Reichweiten-Verlängerer (3), um ausgeschalten zu werden, und Steuern des Reichweiten-Verlängerers (3), um in einen Stoppmodus einzutreten, so dass das Elektrofahrzeug in einem rein elektrischen Modus arbeitet; oder
Steuern des BMS über CAN2-Befehle, um alle Batteriepacke (B1, BN) mit dem Hochspannungsgleichstrombus zu verbinden, Steuern aller ersten Schalter (S1+, SN+) zwischen den Batteriepacken (B1, BN) und dem Hochspannungsgleichstrombus, um eingeschalten zu werden, Steuern aller zweiten Schalter (S1-, SN-) zwischen den Batteriepacken (B1, BN) und dem Reichweiten-Verlängerer (3), um eingeschalten zu werden, und Steuern des Reichweiten-Verlängerers (3), um in einen Konstantleistungsmodus einzutreten, so dass das Elektrofahrzeug in einem reichweitenerweiterten Modus arbeitet.

5. Leistungsversorgungssystem nach Anspruch 4, wobei die Steuervorrichtung (4), in dem reichweitenerweiterten Modus, ferner zu Folgendem konfiguriert ist:
Steuern des Reichweiten-Verlängerers (3), um in einen Nennleistungsmodus oder einen Halbleistungsmodus gemäß einem Leistungsverbrauch und/oder einer Geschwindigkeit des Elektrofahrzeugs einzutreten; oder
falls sich das Batteriesystem in einem erschöpften Zustand befindet und die Leistung, die durch den Reichweiten-Verlängerer (3) in dem Nennleistungsmodus erzeugt wird, geringer als die Leistung ist, die durch das Elektrofahrzeug verbraucht wird, Steuern des Elektrofahrzeugs, um in einen Notlaufmodus einzutreten, in dem die Geschwindigkeit des Elektrofahrzeugs auf eine Notlaufgeschwindigkeit begrenzt wird, so dass die Leistung, die durch das Elektrofahrzeug verbraucht wird, geringer als die Leistung ist, die durch den Reichweiten-Verlängerer (3) in dem Nennleistungsmodus erzeugt wird.

6. Leistungsversorgungssystem nach Anspruch 3, wobei die Steuervorrichtung (4), falls die Spannungen der Batteriepacken (B1, BN) als nicht konsistent erkannt werden, ferner zu Folgendem konfiguriert ist: Steuern des BMS über einen CAN2-Befehl, um einen ersten Batteriepack mit der höchsten Spannung an den Hochspannungsgleichstrombus zu verbinden, und Steuern des ersten Schalters (S1+, SN+), der mit dem ersten Batteriepack verbunden ist, um eingeschaltet zu werden, und des zweiten Schalters (S1-, SN-), der mit dem ersten Batteriepack verbunden ist, um ausgeschaltet zu werden, so dass das Elektrofahrzeug in einem Ausgleichsmodus arbeitet.

7. Leistungsversorgungssystem nach Anspruch 6, wobei die Steuervorrichtung (4), in dem Ausgleichsmodus, ferner zu Folgendem konfiguriert ist:
falls die Spannung eines zweiten Batteriepacks niedriger als die Spannung des Hochspannungsgleichstrombusses ist, Nehmen der Spannung des Hochspannungsgleichstrombusses als eine erste Zielspannung, Steuern des BMS über einen CAN2-Befehl, um den zweiten Batteriepack mit dem Hochspannungsgleichstrombus zu verbinden, und Steuern des ersten Schalters (S1+, SN+), der mit dem zweiten Batteriepack verbunden ist, um ausgeschaltet zu werden, und des zweiten Schalters (S1-, SN-), der mit dem zweiten Batteriepack verbunden ist, um eingeschaltet zu werden, so dass der zweite Batteriepack durch den Reichweiten-Verlängerer (3) geladen wird; und
falls sich die Spannung des zweiten Batteriepacks erhöht und die erste Zielspannung erreicht, Steuern des ersten Schalters (S1+, SN+), der mit dem zweiten Batteriepack verbunden ist, um eingeschaltet zu werden, um den zweiten Batteriepack mit dem Hochspannungsgleichstrombus zu verbinden,
wobei der zweite Batteriepack ein anderer Batteriepack als der erste Batteriepack unter den Batteriepacken (B1, BN) ist.

8. Leistungsversorgungssystem nach Anspruch 6, wobei die Steuervorrichtung (4), in dem Ausgleichsmodus, ferner zu Folgendem konfiguriert ist:
falls die Spannung eines zweiten Batteriepacks höher als die Spannung des Hochspannungsgleichstrombusses ist, Nehmen der Spannung des zweiten Batteriepacks als zweite Zielspannung, Steuern des zweiten Schalters (S1-, SN-) zwischen dem Reichweiten-Verlängerer (3) und dem ersten Batteriepack, um eingeschaltet zu werden, und Steuern des Reichweiten-Verlängerers (3), um in einen Leistungsfolgemodus einzutreten, um die Spannung des Hochspannungsgleichstrombusses durch Reduzieren einer Belastung des ersten Batteriepacks zu erhöhen; und
falls die Spannung des Hochspannungsgleichstrombusses auf die zweite Zielspannung erhöht, Steuern des ersten Schalters (S1+, SN+), der mit dem zweiten Batteriepack verbunden ist, um eingeschaltet zu werden, um den zweiten Batteriepack mit dem Hochspannungsgleichstrombus zu verbinden,
wobei der zweite Batteriepack ein anderer Batteriepack als der erste Batteriepack unter den Batteriepacken (B1, BN) ist.

9. Leistungsversorgungssystem nach Anspruch 1, wobei die Steuervorrichtung (4) konfiguriert ist, um eine Spannung jedes Batteriepacks (B1, BN) zu erkennen, und falls die Spannungen der Batteriepacke (B1, BN) als konsistent erkannt werden, dann die ersten Schalter (S1+, SN+) für alle Batteriepacke (B1, BN) eingeschaltet werden.

10. Leistungsversorgungssystem nach Anspruch 1, wobei die Steuervorrichtung (4) konfiguriert ist, um eine Spannung jedes Batteriepacks (B1, BN) zu erkennen, und falls die Spannungen der Batteriepacke (B1, BN) als nicht konsistent erkannt werden, dann der erste Schalter (S1+, SN+) für einen ersten Batteriepack, der die höchste Spannung unter den Batteriepacken (B1, BN) aufweist, eingeschaltet wird, während die ersten Schalter (S1+, SN+) für die verbleibenden Batteriepacken (B1, BN) ausgeschaltet werden.

11. Steuerverfahren für ein Leistungsversorgungssystem für ein Elektrofahrzeug, **dadurch gekennzeichnet, dass** das Steuerverfahren das Verwenden des Leistungsversorgungssystems nach einem der Ansprüche 1 bis 10 umfasst, um das Elektrofahrzeug zu betreiben.

12. Elektrofahrzeug, **dadurch gekennzeichnet, dass** das Elektrofahrzeug das Leistungsversorgungssystem nach einem der Ansprüche 1 bis 10 verwendet und/oder das Elektrofahrzeug durch das Steuerverfahren nach Anspruch 11 gesteuert wird.

## Revendications

1. Système d'alimentation électrique pour un véhicule électrique, comprenant :
un système de batterie comprenant une pluralité de blocs-batteries (B1, BN) connectés en parallèle qui sont commandés par un système de gestion de batterie (BMS) pour être connectés et déconnectés à partir d'un bus CC haute tension du véhicule électrique, dans lequel le système de batterie est configuré pour alimenter le véhicule électrique ;
un prolongateur d'autonomie (3) configuré pour générer un courant CC de manière à charger le système de batterie et d'alimenter le véhicule électrique ; et
un dispositif de commande (4) configuré pour commander un mode de génération d'énergie du prolongateur d'autonomie (3), pour commander un état de connexion de chaque bloc-batterie (B1, BN) avec le bus CC haute tension du véhicule électrique, et pour commander un état de connexion du prolongateur d'autonomie (3) avec le bus CC haute tension du véhicule électrique ;
**caractérisé en ce que**,
le système d'alimentation électrique comprenant en outre une pluralité de commutateurs comprenant un premier commutateur (S1+, SN+) et un second commutateur (S1-, SN-) prévus respectivement pour chaque bloc-batterie (B1, BN), le premier commutateur (S1+, SN+) étant agencé entre un bloc-batterie respectif (B1, BN) et le bus CC haute tension, une extrémité du second commutateur (S1-, SN-) étant connectée au prolongateur d'autonomie (3), et l'autre extrémité du second commutateur (S1-, SN-) étant connectée à un bloc-batterie respectif (B1, BN) et le premier commutateur (S1+, SN+) connectant ledit bloc-batterie (B1, BN) à une position entre ledit bloc-batterie (B1, BN) et ledit premier commutateur (S1+, SN+), et
pour chacun de la pluralité de blocs-batteries (B1, BN) connectés en parallèle, lorsque le premier commutateur (S1+, SN+) connecté au bloc-batterie (B1, BN) est activé et le second commutateur (S1-, SN-) connecté au bloc-batterie (B1, BN) est éteint, le bloc-batterie (B1, BN) est configuré pour alimenter le véhicule électrique ; lorsque le premier commutateur (S1+, SN+) connecté au bloc-batterie (B1, BN) est éteint et que le second commutateur (S1-, SN-) connecté au bloc-batterie (B1, BN) est activé, le prolongateur d'autonomie (3) est configuré pour charger le bloc-batterie (B1, BN) ; et lorsque le premier commutateur (S1+, SN+) et le second commutateur (S1-, SN-) connectés au bloc-batterie (B1, BN) sont activés, le prolongateur d'autonomie et le bloc-batterie (B1, BN) sont configurés pour alimenter simultanément le véhicule électrique.

2. Système d'alimentation électrique selon la revendication 1, dans lequel le prolongateur d'autonomie (3) comprend l'un d'un générateur de carburant, d'un générateur de gaz naturel, d'un générateur d'éther d'alcool, d'un générateur d'air comprimé et d'un générateur de pile à combustible à hydrogène, et
le prolongateur d'autonomie (3) est configuré pour fournir un courant électrique pour charger le bloc-batterie (B1, BN), pour alimenter le véhicule électrique, ou pour charger le bloc-batterie (B1, BN) et alimenter le véhicule électrique simultanément.

3. Système d'alimentation électrique selon la revendication 1, dans lequel le dispositif de commande (4) est configuré pour commander le mode de génération d'énergie du prolongateur d'autonomie (3), et commander un état de chaque premier commutateur (S1+, SN+) et de chaque second commutateur (S1-, SN-) selon la tension du bloc-batterie respectif (B1, BN), de manière à commander l'état de connexion du bloc-batterie respectif (B1, BN) avec le bus CC haute tension, et à commander l'état de connexion du bloc-batterie respectif (B1, BN) avec le prolongateur d'autonomie (3).

4. Système d'alimentation électrique selon la revendication 3, dans lequel le dispositif de commande (4) est en outre configuré pour, si les tensions des blocs-batteries (B1, BN) sont détectées comme étant cohérentes,
commander le BMS par le biais de commandes CAN2 pour connecter tous les blocs-batteries (B1, BN) au bus CC haute tension, commander tous les premiers commutateurs (S1+, SN+) entre les blocs-batteries (B1, BN) et le bus CC haute tension à activer, commander tous les seconds commutateurs (S1-, SN-) entre les blocs-batteries (B1, BN) et le prolongateur d'autonomie (3) à éteindre, et commander le prolongateur d'autonomie (3) pour entrer dans un mode d'arrêt, de sorte que le véhicule électrique fonctionne en mode électrique pur ; ou
commander le BMS par le biais de commandes CAN2 pour connecter tous les blocs-batteries (B1, BN) au bus DC haute tension, commander tous les premiers commutateurs (S1+, SN+) entre les blocs-batteries (B1, BN) et le bus CC haute tension à activer, commander tous les seconds commutateurs (S1-, SN-) entre les blocs-batteries (B1, BN) et le prolongateur d'autonomie (3) à allumer, et commander le prolongateur d'autonomie (3) pour entrer dans un mode à puissance constante, de sorte que le véhicule électrique fonctionne en mode d'autonomie étendue.

5. Système d'alimentation électrique selon la revendication 4, dans lequel le dispositif de commande (4) est en outre configuré pour, dans le mode d'autonomie étendue,
commander le prolongateur d'autonomie (3) pour entrer dans un mode de puissance nominale ou un mode de demi-puissance selon une consommation d'énergie et/ou une vitesse du véhicule électrique ; ou
si le système de batterie est dans un état épuisé et que la puissance générée par le prolongateur d'autonomie (3) dans le mode de puissance nominale est inférieure à la puissance consommée par le véhicule électrique, commander le véhicule électrique pour qu'il passe en mode dégradé où la vitesse du véhicule électrique est limitée à une vitesse en mode dégradé, de sorte que la puissance consommée par le véhicule électrique est inférieure à la puissance générée par le prolongateur d'autonomie (3) dans le mode de puissance nominale.

6. Système d'alimentation électrique selon la revendication 3, dans lequel le dispositif de commande (4) est en outre configuré pour, si les tensions des blocs-batterie (B1, BN) sont détectées comme n'étant pas cohérentes, commander le BMS par le biais d'une commande CAN2 pour connecter un premier bloc-batterie avec la tension la plus élevée au bus CC haute tension, et commander le premier commutateur (S1+, SN+) connecté au premier bloc-batterie à activer et le second commutateur (S1-, SN-) connecté au premier bloc-batterie à éteindre, de sorte que le véhicule électrique fonctionne en mode d'égalisation.

7. Système d'alimentation électrique selon la revendication 6, dans lequel le dispositif de commande (4) est en outre configuré pour, dans le mode d'égalisation,
si la tension d'un second bloc-batterie est inférieure à la tension du bus CC haute tension, prendre la tension du bus CC haute tension comme première tension cible, commander le BMS par le biais d'une commande CAN2 pour connecter le second bloc-batterie au bus CC haute tension, et commander le premier commutateur (S1+, SN+) connecté au second bloc-batterie à éteindre et le second commutateur (S1-, SN-) connecté au second bloc-batterie à activer, de sorte que le second bloc-batterie est chargé par le prolongateur d'autonomie (3) ; et
si la tension du second bloc-batterie augmente et atteint la première tension cible, commander le premier commutateur (S1+, SN+) connecté au second bloc-batterie à activer, de manière à connecter le second bloc-batterie au bus CC haute tension,
dans lequel le second bloc-batterie est un bloc-batterie autre que le premier bloc-batterie parmi les blocs-batteries (B1, BN).

8. Système d'alimentation électrique selon la revendication 6, dans lequel le dispositif de commande (4) est en outre configuré pour, dans le mode d'égalisation,
si la tension d'un second bloc-batterie est supérieure à la tension du bus CC haute tension, prendre la tension du second bloc-batterie comme une seconde tension cible, commander le second commutateur (S1-, SN-) entre le prolongateur d'autonomie (3) et le premier bloc-batterie à activer, et commander le prolongateur d'autonomie (3) pour entrer dans un mode de suivi de puissance, de manière à augmenter la tension du bus CC haute tension en réduisant une charge du premier bloc-batterie ; et
si la tension du bus CC haute tension augmente jusqu'à la seconde tension cible, commander le premier commutateur (S1+, SN+) connecté au second bloc-batterie à activer, de manière à connecter le second bloc-batterie au bus CC haute tension,
dans lequel le second bloc-batterie est un bloc-batterie autre que le premier bloc-batterie parmi les blocs-batteries (B1, BN).

9. Système d'alimentation électrique selon la revendication 1, dans lequel le dispositif de commande (4) est configuré pour détecter une tension de chaque bloc-batterie (B1, BN), et si les tensions des blocs-batteries (B1, BN) sont détectées comme étant cohérentes, puis les premiers commutateurs (S1+, SN+) pour tous les blocs-batteries (B1, BN) sont activés.

10. Système d'alimentation électrique selon la revendication 1, dans lequel le dispsositif de commande (4) est configuré pour détecter une tension de chaque bloc-batterie (B1, BN), et si les tensions des blocs-batteries (B1, BN) sont détectées comme n'étant pas cohérentes, puis le premier commutateur (S1+, SN+) pour un premier bloc-batterie qui a la tension la plus élevée parmi les blocs-batteries (B1, BN) est activé, tandis que les premiers commutateurs (S1+, SN+) pour les blocs-batteries restants (B1, BN) sont éteints.

11. Procédé de commande d'un système d'alimentation électrique pour un véhicule électrique, **caractérisé en ce que** le procédé de commande comprend l'utilisation du système d'alimentation électrique selon l'une quelconque des revendications 1 à 10 pour alimenter le véhicule électrique.

12. Véhicule électrique, **caractérisé en ce que** le véhicule électrique utilise le système d'alimentation électrique selon l'une quelconque des revendications 1 à 10, et/ou le véhicule électrique est commandé par le procédé de commande selon la revendication 11.
